# EUROPEAN PATENT APPLICATION

(11) **EP 4 700 901 A1**
(43) Date of publication of application: **25.02.2026**
(21) Application number: 23933488.1
(22) Date of filing: 21.04.2023
(51) Int. Cl.: H01M 10/48, G01N 21/78, G01N 21/35, G01N 21/33, H01M 10/42, H01M 50/449

(54) **SEPARATOR, SECONDARY BATTERY COMPRISING SAME, AND ELECTRICAL APPARATUS**

(71) Applicant: Contemporary Amperex Technology Co., Limited, Ningde, Fujian 352100 (CN)
(72) Inventor: WANG, Zhaoguang, Ningde, Fujian 352100 (CN); YANG, Jianrui, Ningde, Fujian 352100 (CN); SUN, Chengdong, Ningde, Fujian 352100 (CN); HUANG, Siying, Ningde, Fujian 352100 (CN); OUYANG, Chuying, Ningde, Fujian 352100 (CN); HAN, Chongwang, Ningde, Fujian 352100 (CN)
(74) Representative: Gong, Jinping
(86) International application number: PCT/CN2023/089661
(87) International publication number: WO 2024/216612

(57) **Abstract**

The present application provides a separator, a secondary battery including a separator, and a power consuming apparatus. The separator includes a first base film and a coating. The coating is located on a surface of the first base film, and the coating includes a thermochromic material.

## Description

### TECHNICAL FIELD

The present application relates to a separator, a secondary battery including a separator, and a power consuming apparatus.

### BACKGROUND

In recent years, secondary batteries have been widely used in energy storage power supply systems such as water power stations, thermal power stations, wind power stations, and solar power stations, and in a plurality of fields such as electric tools, electric bicycles, electric motorcycles, electric vehicles, military equipment, and aerospace. With the application and promotion of secondary batteries, a requirement on reliability of the secondary batteries is increasingly high.

### SUMMARY

The present application provides a separator, a secondary battery including a separator, and a power consuming apparatus, to improve reliability of the secondary battery.

According to a first aspect of the present application, a separator is provided, including a first base film and a coating. The coating is located on a surface of the first base film, and the coating includes a thermochromic material.

Without intending to be limited to any theory or explanation, in the separator of the present application, the coating includes the thermochromic material. A color of the thermochromic material may change with a change of an internal temperature of a battery. In other words, when the internal temperature of the battery changes, a color of the separator also changes. When an accidental condition such as a short circuit or overcharging occurs, heat is generated inside the battery and the temperature of the battery increases, and the color of the separator also correspondingly changes. A thermal runaway status of the battery may be determined by sensing a change of the color of the separator, to process the battery in time, thereby reducing a risk that the battery explodes and improving reliability of the battery.

In any implementation of the present application, the thermochromic material includes one or more of a thermochromic material of an azobenzene type, a thermochromic material of a stearate type, a thermochromic material of a higher aliphatic alcohol type, a thermochromic material of a type of a hydroxyl-group compound including a carboxyl group, a thermochromic material of a phenolic-hydroxyl-group compound type, a thermochromic material of a metal coordination complex type, a thermochromic material of a type of a polyaromatic ring structure including CH=CH, and a thermochromic material of an inorganic metal salt type.

Optionally, the thermochromic material of the azobenzene type includes dimethylamino benzene azobenzene.

Optionally, the thermochromic material of the stearate type includes barium stearate and/or zinc stearate.

Optionally, the thermochromic material of the higher aliphatic alcohol type includes hexadecanol and/or octadecanol.

Optionally, the thermochromic material of the type of the hydroxyl-group compound including the carboxyl group includes 6-hydroxyhexanoic acid and/or 2-hydroxyterephthalic acid.

Optionally, the thermochromic material of the phenolic-hydroxyl-group compound type includes bisphenol A and/or benzyl 4-hydroxybenzoate.

Optionally, the thermochromic material of the metal coordination complex type includes one or more of a triphenylmethane metal coordination complex, an organic amine metal coordination complex, and an ammonium metal coordination complex.

Optionally, the thermochromic material of the type of the polyaromatic ring structure including CH=CH includes one or more of bianthrone-type compounds.

Optionally, the thermochromic material of the inorganic metal salt type includes one or more of a sulfate including a metal element M, a vanadate, and a chromate, and the metal element M includes one or more of Bi, Pb, Ni, Co, and Cd.

The thermochromic materials of the foregoing types have a suitable color-changing temperature range, so that a thermal runaway risk of the battery can be accurately prompted in time by sensing the change of the color of the separator when the battery verges on thermal runaway, to process the battery in time, thereby reducing the risk that the battery explodes and improving the reliability of the battery.

In any implementation of the present application, the thermochromic material includes a reversible thermochromic material.

Optionally, the reversible thermochromic material includes one or more of the thermochromic material of the higher aliphatic alcohol type, the thermochromic material of the type of the hydroxyl-group compound including the carboxyl group, the thermochromic material of the phenolic-hydroxyl-group compound type, the thermochromic material of the metal coordination complex type, and the thermochromic material of the type of the polyaromatic ring structure including CH=CH.

Further optionally, the reversible thermochromic material includes one or more of hexadecanol, octadecanol, 6-hydroxyhexanoic acid, 2-hydroxyterephthalic acid, bisphenol A, benzyl 4-hydroxybenzoate, a triphenylmethane metal coordination complex, an organic amine metal coordination complex, an ammonium metal coordination complex, and bianthrone-type compounds.

The thermochromic material includes the reversible thermochromic material, so that a risk that the color of the separator permanently changes during normal use of the battery can be reduced, and the separator is allowed to be used for detection for a plurality of times. Therefore, the reliability of the battery can be improved.

In any implementation of the present application, the thermochromic material includes the thermochromic material of the inorganic metal salt type.

Optionally, the thermochromic material includes one or more of a sulfate including a metal element M, a vanadate, and a chromate, and the metal element M includes one or more of Bi, Pb, Ni, Co, and Cd.

When the coating includes the thermochromic material of the inorganic metal salt type, thermal resistance performance of the separator can be improved, thereby further improving the reliability of the battery.

In any implementation of the present application, a content of the thermochromic material ranges from 0.5% to 7%, and optionally from 1% to 5% based on a total mass of the coating.

When the content of the thermochromic material in the coating satisfies the provided range, accuracy of monitoring thermal runaway can be improved, thereby improving the reliability of the battery. In addition, the separator can have good air permeability, thereby improving cycle performance of the battery.

In any implementation of the present application, the coating further includes a binder, and the binder includes one or more of polyacrylate, polyacrylic acid, polytetrafluoroethylene, polyvinylidene fluoride, vinylidene fluoride-trichloroethylene copolymer, polyvinylpyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl pullulan.

Optionally, a content of the binder is less than or equal to 25%, and optionally ranges from 5% to 25% based on the total mass of the coating.

The binder can endow good thermal resistance for the separator while an adhesion strength and uniformity of both the first base film and a second base film are ensured, thereby improving the reliability of the secondary battery.

In any implementation of the present application, the coating further includes a filler.

Optionally, the filler includes at least one of inorganic particles, organic particles, and an organic-metal framework material.

Further optionally, the inorganic particles include one or more of inorganic particles with a dielectric constant greater than 5, inorganic particles having ion conductivity but storing no ion, and inorganic particles capable of performing electrochemical reaction.

Further optionally, the organic particles include one or more of polycarbonate, polytetrafluorethylene, polypyrrole, polystyrene, polyacrylate wax, polyethylene, polypropylene, cellulose, a cellulose modifier, melamine resin, phenolic resin, polyester, organic silicon resin, polyimide, polyamide-imide, aromatic polyamide, polyphenylene sulfide, polysulfone, polyethersulfone, polyetheretherketone, polyetherketoneketone, and copolymer of butyl acrylate and ethyl methacrylate.

Further optionally, the organic-metal framework material includes one or more of a structure constructed by nitrogen-containing heterocyclic ligands, a structure constructed by organic carboxylic ligands, and a structure constructed by nitrogen-oxygen-containing mixed ligands.

In any implementation of the present application, a content of the filler is less than or equal to 90%, and optionally ranges from 20% to 80% based on the total mass of the coating.

The filler can further improve the thermal resistance and physical performance (such as a tensile strength and a puncture strength) of the separator, so that the reliability of the secondary battery can be improved.

In any implementation of the present application, a thickness of the coating ranges from 0.5 µm to 3 µm. Optionally, the thickness of the coating ranges from 1 µm to 2 µm. Therefore, the accuracy of monitoring the thermal runaway can be further improved, thereby improving the reliability of the battery. In addition, the thickness of the coating is small, so that an energy density of the battery can further be improved.

In any implementation of the present application, the separator further includes a second base film, and the coating is located between the first base film and the second base film. Therefore, on one hand, side reaction between the thermochromic material in the coating and an electrolyte solution can be suppressed, to reduce a risk that the thermochromic material fails and improve the accuracy of monitoring the thermal runaway. On the other hand, the first base film and the second base film can further fix the coating, to reduce a risk that the coating falls off due to immersion in the electrolyte solution.

In any implementation of the present application, a thickness of the first base film ranges from 2 µm to 10 µm. Optionally, the thickness of the first base film ranges from 3 µm to 8 µm.

In any implementation of the present application, a thickness of the second base film ranges from 3 µm to 9 µm. Optionally, the thickness of the second base film ranges from 3 µm to 7 µm.

When the thickness of the first base film and/or the thickness of the second base film satisfy the foregoing conditions, the separator can have a small overall thickness, so that the energy density of the secondary battery is improved.

In any implementation of the present application, a material of the first base film includes at least one of polyolefin and a derivative thereof, halogenated polyolefin and a derivative thereof, polyether and a derivative thereof, polyetheretherketone and a derivative thereof, polyester and a derivative thereof, polyimide and a derivative thereof, polyvinyl alcohol and a derivative thereof, polytetrafluoroethylene and a derivative thereof, polyvinyl fluoride and a derivative thereof, polyvinylidene fluoride and a derivative thereof, and polyethylene terephthalate and a derivative thereof.

In any implementation of the present application, a material of the second base film includes at least one of polyolefin and a derivative thereof, halogenated polyolefin and a derivative thereof, polyether and a derivative thereof, polyetheretherketone and a derivative thereof, polyester and a derivative thereof, polyimide and a derivative thereof, polyvinyl alcohol and a derivative thereof, polytetrafluoroethylene and a derivative thereof, polyvinyl fluoride and a derivative thereof, polyvinylidene fluoride and a derivative thereof, and polyethylene terephthalate and a derivative thereof.

In any implementation of the present application, a transverse thermal shrinkage rate of the separator at 250 °C for 1 h is less than or equal to 3%, and is optionally less than or equal to 1%.

In any implementation of the present application, a longitudinal thermal shrinkage rate of the separator at 250 °C for 1 h is less than or equal to 3%, and is optionally less than or equal to 1%.

When the transverse thermal shrinkage rate and/or the longitudinal thermal shrinkage rate of the separator satisfy the provided range, the separator can have good thermal resistance performance and physical performance, so that the reliability of the secondary battery can be improved.

According to a second aspect of the present application, a secondary battery is provided, including the separator in the first aspect. Therefore, the secondary battery has high reliability.

According to a third aspect of the present application, a power consuming apparatus is provided, including the secondary battery in the second aspect.

The power consuming apparatus in the present application includes the secondary battery provided in the present application, so that the power consuming apparatus at least has advantages the same as those of the secondary battery.

### BRIEF DESCRIPTION OF THE DRAWINGS

To describe the technical solutions of embodiments of the present application more clearly, the following briefly describes the accompanying drawings for describing the embodiments of the present application. It is clear that the accompanying drawings described below are merely some implementations of the present application, and a person of ordinary skill in the art may further derive other drawings based on the accompanying drawings without creative efforts.
FIG. 1 is a schematic diagram of an implementation of a secondary battery according to the present application;
FIG. 2 is a schematic exploded view of an implementation of a secondary battery according to the present application;
FIG. 3 is a schematic diagram of an implementation of a battery module according to the present application;
FIG. 4 is a schematic diagram of an implementation of a battery pack according to the present application;
FIG. 5 is a schematic exploded view of an implementation of the battery pack shown in FIG. 4; and
FIG. 6 is a schematic diagram of an implementation of a power consuming apparatus in which a secondary battery serves as a power supply according to the present application.

In the drawings, the components are not drawn to actual scale. Descriptions of reference numerals are as follows: 1. battery pack; 2. upper box; 3. lower box; 4. battery module; 5. secondary battery; 51. housing; 52. electrode assembly; and 53. cover plate.

### DETAILED DESCRIPTION

Hereinafter, implementations of a separator, a secondary battery including a separator, and a power consuming apparatus of the present application are specifically disclosed in the detailed descriptions with reference to the accompanying drawings as appropriate. However, there may be situations where unnecessary detailed explanations are omitted. For example, there are situations where detailed explanations of well-known matters and repeated explanations of actually the same structure are omitted. Thus, the following descriptions do not become unnecessarily lengthy, which facilitates understanding by those skilled in the art. In addition, the drawings and subsequent descriptions are provided for those skilled in the art to fully understand the present application, and are not intended to limit the subject matter recited in the claims.

The "ranges" disclosed in the present application are defined in the form of lower and upper limits, with a given range being defined by the selection of a lower limit and an upper limit defining the boundaries of the particular range. The range defined in this way may include or exclude end values, and may be arbitrarily combined, that is, any lower limit can be combined with any upper limit to form a range. For example, if ranges of 60 to 120 and 80 to 110 are listed for a particular parameter, it is to be understood that ranges of 60 to 110 and 80 to 120 are also expected. Additionally, if the minimum range values 1 and 2 and the maximum range values 3, 4 and 5 are listed, the following ranges are all contemplated: 1 to 3, 1 to 4, 1 to 5, 2 to 3, 2 to 4 and 2 to 5. In the present application, unless stated otherwise, the numerical range "a to b" represents an abbreviated representation of any combination of real numbers between a to b, where both a and b are real numbers. For example, the numerical range "0 to 5" means that all real numbers between 0 and 5 are listed herein, and "0 to 5" is merely an abbreviated representation of the combination of these numbers. In addition, when a parameter is expressed as an integer ≥2, it is equivalent to disclosing that the parameter is, for example, an integer of 2, 3, 4, 5, 6, 7, 8, 9, 10, 11, 12, or the like.

Unless otherwise specified, all the implementations and optional implementations of the present application can be combined with each other to form new technical solutions, and such technical solutions should be considered to be included in the disclosure of the present application.

Unless otherwise specified, all the technical features and optional technical features of the present application can be combined with each other to form new technical solutions, and such technical solutions should be considered to be included in the disclosure of the present application.

Unless otherwise specified, all the steps in the present application can be performed in the order described or in a random order, and preferably in the order described. For example, the method includes steps (a) and (b), meaning that the method may include steps (a) and (b) performed sequentially, or may include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), or the like.

Unless otherwise specifically stated, "including" and "comprising" mentioned in the present application indicate open inclusion or closed inclusion. For example, the "including" and "comprising" may indicate that it is possible to include or comprise other components not listed, and it is also possible to include or comprise the listed components exclusively.

If not specifically stated, in the present application, the term 'or' is inclusive. For example, the phrase "A or B" means "A, B, or both A and B" More specifically, any one of the following conditions satisfies the condition "A or B": A is true (or present) and B is false (or not present); A is false (or not present) and B is true (or present); or both A and B are true (or present).

Unless otherwise specified, in the present application, the terms "first", "second", and the like are used to distinguish different objects, rather than to describe a specific order or primary-secondary relationship.

In addition, in the present application, the term "a plurality of" or "a plurality of types of" indicates two or more.

Unless otherwise specified, the terms used in the present application have well-known meanings as commonly understood by persons skilled in the art.

Unless otherwise stated, the values of the parameters mentioned in the present application can be measured by various test methods commonly used in the art, for example, can be measured according to the test methods given in the embodiments of the present application. Unless otherwise specified, the test temperature of each parameter is 25°C.

Unless otherwise stated, the ratio parameters involved in the present application are all compared under the same unit. For example, a thickness ratio of A to B is 1.2:1, and in this case, the thickness units of A and B are the same.

### Separator

Generally, a secondary battery includes an electrode assembly and an electrolyte. The electrode assembly includes a positive electrode plate, a negative electrode plate, and a separator. The separator is disposed between the positive electrode plate and the negative electrode plate, to mainly prevent a short circuit between the positive electrode plate and the negative electrode plate.

A separator provided in an embodiment of the present application includes a first base film and a coating, and the coating is located on a surface of the first base film. The coating includes a thermochromic material.

Currently, a separator used in a commercial secondary battery is usually a polyolefin porous film, and has poor thermal resistance. When an internal temperature of the battery is excessively high, an obvious thermal shrinkage effect occurs, resulting in direct contact between a positive electrode and a negative electrode inside the battery, and causing an internal short circuit. As a result, a safety risk of the secondary battery increases.

Without intending to be limited to any theory or explanation, in the separator of the present application, the coating includes the thermochromic material. A color of the thermochromic material may change with a change of an internal temperature of a battery. In other words, when the internal temperature of the battery changes, a color of the separator also changes. When an accidental condition such as a short circuit or overcharging occurs, heat is generated inside the battery and the temperature of the battery increases, and the color of the separator also correspondingly changes. A thermal runaway status of the battery may be determined by sensing a change of the color of the separator, to process the battery in time, thereby reducing a risk that the battery explodes and improving reliability of the battery.

In some embodiments, the thermochromic material may include one or more of a thermochromic material of an azobenzene type, a thermochromic material of a stearate type, a thermochromic material of a higher aliphatic alcohol type, a thermochromic material of a type of a hydroxyl-group compound including a carboxyl group, a thermochromic material of a phenolic-hydroxyl-group compound type, a thermochromic material of a metal coordination complex type, a thermochromic material of a type of a polyaromatic ring structure including CH=CH, and a thermochromic material of an inorganic metal salt type.

Optionally, in some embodiments, the thermochromic material of the azobenzene type may include dimethylamino benzene azobenzene.

Optionally, in some embodiments, the thermochromic material of the stearate type may include barium stearate and/or zinc stearate.

Optionally, in some embodiments, the thermochromic material of the higher aliphatic alcohol type may include hexadecanol and/or octadecanol.

Optionally, in some embodiments, the thermochromic material of the type of the hydroxyl-group compound including the carboxyl group may include 6-hydroxyhexanoic acid and/or 2-hydroxyterephthalic acid.

Optionally, in some embodiments, the thermochromic material of the phenolic-hydroxyl-group compound type may include bisphenol A and/or benzyl 4-hydroxybenzoate.

Optionally, in some embodiments, the thermochromic material of the metal coordination complex type may include one or more of a triphenylmethane metal coordination complex, an organic amine metal coordination complex, and an ammonium metal coordination complex. Further optionally, in some embodiments, in the thermochromic material of the metal coordination complex type, metal may include at least one of Ni, Co, and Al.

Optionally, in some embodiments, the thermochromic material of the type of the polyaromatic ring structure including CH=CH may include one or more of bianthrone-type compounds.

Optionally, in some embodiments, the thermochromic material of the inorganic metal salt type may include one or more of a sulfate including a metal element M, a vanadate, and a chromate, and the metal element M includes one or more of Bi, Pb, Ni, Co, and Cd. For example, the metal element M may be one or more of BiVO₄, BiSO₄, BiCrO₄, PbVO₄, PbSO₄, PbCrO₄, NiVO₄, NiSO₄, NiCrO₄, CoVO₄, CoSO₄, CoCrO₄, CdVO₄, CdSO₄, and CdCrO₄.

Without intending to be limited to any theory or explanation, the thermochromic materials of the foregoing types have a suitable color-changing temperature range, and can correspondingly change a color when the battery verges on thermal runaway. Therefore, a thermal runaway risk of the battery can be accurately prompted in time by sensing the change of the color of the separator when the battery verges on thermal runaway, to process the battery in time, thereby reducing the risk that the battery explodes and improving the reliability of the battery.

In some embodiments, the thermochromic material may include a reversible thermochromic material.

In some embodiments, the reversible thermochromic material may include one or more of the thermochromic material of the higher aliphatic alcohol type, the thermochromic material of the type of the hydroxyl-group compound including the carboxyl group, the thermochromic material of the phenolic-hydroxyl-group compound type, the thermochromic material of the metal coordination complex type, and the thermochromic material of the type of the polyaromatic ring structure including CH=CH.

Optionally, in some embodiments, the reversible thermochromic material may include one or more of hexadecanol, octadecanol, 6-hydroxyhexanoic acid, 2-hydroxyterephthalic acid, bisphenol A, benzyl 4-hydroxybenzoate, a triphenylmethane metal coordination complex, an organic amine metal coordination complex, an ammonium metal coordination complex, and bianthrone-type compounds.

After the color of the reversible thermochromic material changes when the temperature increases to a particular range, the color may be restored to an original color when the temperature decreases. During normal use of the battery, the internal temperature of the battery also fluctuates to some extent. For example, the temperature may increase when an external temperature changes or the battery is charged. The reversible thermochromic material is used, so that a risk that the color of the separator permanently changes during normal use of the battery can be reduced, accuracy of monitoring thermal runaway is improved, and the reliability of the battery is improved.

In addition, when the battery verges on thermal runaway, the battery can be processed in time by sensing the change of the color of the separator, to reduce the temperature of the battery. If the color of the separator is irreversible, the separator cannot be used for detection in a subsequent use process of the battery. In this embodiment of the present application, the reversible thermochromic material is used, so that the separator can be used for detection for a plurality of times, thereby improving the reliability of the battery.

In some embodiments, the thermochromic material may include the thermochromic material of the inorganic metal salt type.

Optionally, in some embodiments, the thermochromic material may include one or more of a sulfate including a metal element M, a vanadate, and a chromate, and the metal element M includes one or more of Bi, Pb, Ni, Co, and Cd. For example, the metal element M may include one or more of BiVO₄, BiSO₄, BiCrO₄, PbVO₄, PbSO₄, PbCrO₄, NiVO₄, NiSO₄, NiCrO₄, CoVO₄, CoSO₄, CoCrO₄, CdVO₄, CdSO₄, and CdCrO₄.

The thermochromic material of the inorganic metal salt type has good thermal resistance performance. When the coating includes the thermochromic material of the inorganic metal salt type, thermal resistance performance of the separator can be improved, and a shrinkage rate of the separator in a heated state is reduced. Therefore, a probability that the positive electrode and the negative electrode contacts and a short circuit occurs is reduced, thereby further improving the reliability of the battery.

In some embodiments, a content of the thermochromic material may range from 0.5% to 7% based on a total mass of the coating, for example, may be 0.5%, 1%, 2%, 3%, 4%, 5%, 6%, or 7%, or a range formed by any two of the foregoing values.

Optionally, in some embodiments, the content of the thermochromic material may further range from 1% to 5% based on the total mass of the coating, for example, may be 1%, 1.5%, 2%, 2.5%, 3%, 3.5%, 4%, 4.5%, or 5%, or a range formed by any two of the foregoing values.

Without intending to be limited to any theory or explanation, when the content of the thermochromic material in the coating satisfies the provided range, on one hand, the color can obviously change in time when the battery verges on thermal runaway, so that the accuracy of monitoring the thermal runaway is improved, and the reliability of the battery is improved. On the other hand, the separator can have good air permeability, thereby improving cycle performance of the battery.

In some embodiments, the coating may further include a filler. The filler can further improve the thermal resistance and physical performance (such as a tensile strength and a puncture strength) of the separator, so that the reliability of the secondary battery can be improved.

In some embodiments, the filler may include at least one of inorganic particles, organic particles, and an organic-metal framework material.

Optionally, the inorganic particles may include one or more of inorganic particles with a dielectric constant greater than 5, inorganic particles having ion conductivity but storing no ion, and inorganic particles capable of performing electrochemical reaction.

Optionally, the organic particles may include one or more of polycarbonate, polytetrafluorethylene, polypyrrole, polystyrene, polyacrylate wax, polyethylene, polypropylene, cellulose, a cellulose modifier (such as carboxymethyl cellulose), melamine resin, phenolic resin, polyester (such as polyethylene terephthalate, polyethylene naphthalate, or polybutylene terephthalate), organic silicon resin, polyimide, polyamide-imide, aromatic polyamide, polyphenylene sulfide, polysulfone, polyethersulfone, polyetheretherketone, polyetherketoneketone, and copolymer of butyl acrylate and ethyl methacrylate (such as a crosslinked polymer of butyl acrylate and ethyl methacrylate).

Optionally, the organic-metal framework material may include one or more of a structure constructed by nitrogen-containing heterocyclic ligands, a structure constructed by organic carboxylic ligands, and a structure constructed by nitrogen-oxygen-containing mixed ligands.

In some embodiments, a thickness of the coating may range from 0.5 µm to 3 µm, for example, may be 0.5 µm, 0.8 µm, 1 µm, 1.2 µm, 1.5 µm, 1.8 µm, 2 µm, 2.2 µm, 2.5 µm, 2.8 µm, or 3 µm, or a range formed by any two of the foregoing values.

Optionally, in some embodiments, the thickness of the coating may further range from 1 µm to 2 µm, for example, may be 1.0 µm, 1.1 µm, 1.2 µm, 1.3 µm, 1.4 µm , 1.5 µm, 1.6 µm, 1.7 µm, 1.8 µm, 1.9 µm, or 2.0 µm, or a range formed by any two of the foregoing values.

When the thickness of the coating is small, the temperature rapidly increases when the coating absorbs little heat. When the internal temperature of the battery increases, the temperature of the coating may rapidly increase correspondingly. Therefore, the color of the thermochromic material in the coating may change in time when the battery is at a risk of thermal runaway. Therefore, the accuracy of monitoring the thermal runaway can be further improved, thereby improving the reliability of the battery. In addition, the thickness of the coating is small, so that an energy density of the battery can further be improved.

The thickness of the coating has well-known meanings in the art, and can be measured by using devices and methods known in the art. In some embodiments, a scanning electron microscope (SEM) image of a cross section of the separator may be obtained by using a scanning electron microscope (such as ZEISS Sigma 300) with reference to JY/T 0584-2020. In an example, the test may be performed according to the following method: randomly select a plurality of regions on the cross section of the separator; measure the thickness of the coating for at least five times at a magnification; count measurement values of different regions; and use an average value as the thickness of the coating.

In some embodiments, the separator may further include a second base film, and the coating is located between the first base film and the second base film.

The coating is located between the first base film and the second base film, so that a risk of powder falling in the coating can be reduced during processing or use. In addition, the first base film and the second base film can protect the coating from two sides, to effectively separate the coating from an electrolyte solution, reduce a region in which the coating is in direct contact with the electrolyte solution, and relieve gum swelling caused by immersion in the electrolyte solution. Therefore, on one hand, side reaction between the thermochromic material in the coating and the electrolyte solution can be suppressed, to reduce a risk that the thermochromic material fails and improve the accuracy of monitoring the thermal runaway. On the other hand, the first base film and the second base film can further fix the coating, to reduce a risk that the coating falls off due to the immersion in the electrolyte solution.

In some embodiments, a bonding strength between the coating and the first base film may be greater than or equal to 3 N/m, for example, may be 3 N/m, 5 N/m, 7 N/m, 9 N/m, 12 N/m, 15 N/m, 20 N/m, or 25 N/m, or a range formed by any two of the foregoing values.

Optionally, in some embodiments, the bonding strength between the coating and the first base film may further range from 5 N/m to 20 N/m, for example, may range from 5 N/m to 20 N/m, from 5 N/m to 18 N/m, from 5 N/m to 15 N/m, from 5 N/m to 10 N/m, from 8 N/m to 20 N/m, from 8 N/m to 16 N/m, from 8 N/m to 12 N/m, from 10 N/m to 20 N/m, from 10 N/m to 15 N/m, or from 15 N/m to 20 N/m.

When the bonding strength between the coating and the first base film satisfies the provided range, structural stability of the separator can be improved, to help reduce the risk that the coating falls off due to the immersion in the electrolyte solution, thereby improving the cycle performance of the battery.

In some embodiments, a bonding strength between the coating and the second base film may be greater than or equal to 3 N/m, for example, may be 3 N/m, 5 N/m, 7 N/m, 9 N/m, 12 N/m, 15 N/m, 20 N/m, or 25 N/m, or a range formed by any two of the foregoing values.

Optionally, in some embodiments, the bonding strength between the coating and the second base film may further range from 5 N/m to 20 N/m, for example, may range from 5 N/m to 20 N/m, from 5 N/m to 18 N/m, from 5 N/m to 15 N/m, from 5 N/m to 10 N/m, from 8 N/m to 20 N/m, from 8 N/m to 16 N/m, from 8 N/m to 12 N/m, from 10 N/m to 20 N/m, from 10 N/m to 15 N/m, or from 15 N/m to 20 N/m.

When the bonding strength between the coating and the second base film satisfies the provided range, structural stability of the separator can be improved, to help reduce the risk that the coating falls off due to the immersion in the electrolyte solution, thereby improving the cycle performance of the battery.

The bonding strength between the coating and the base film has well-known meanings in the art, and can be measured by using devices and methods known in the art. For example, testing may be performed with reference to GB/T 2790-1995.

In some embodiments, a thickness of the first base film may range from 2 µm to 10 µm, for example, may be 2 µm, 3 µm, 4 µm, 5 µm, 6 µm, 7 µm, 8 µm, 9 µm, or 10 µm, or a range formed by any two of the foregoing values.

Optionally, in some embodiments, the thickness of the first base film may further range from 3 µm to 8 µm, for example, may range from 3 µm to 8 µm, from 3 µm to 7 µm, from 3 µm to 6 µm, from 3 µm to 5 µm, from 3 µm to 4 µm, from 4 µm to 8 µm, from 4 µm to 7 µm, from 4 µm to 6 µm, from 4 µm to 5 µm, from 5 µm to 8 µm, from 5 µm to 7 µm, or from 5 µm to 6 µm.

In some embodiments, a thickness of the second base film may range from 3 µm to 9 µm, for example, may be 3 µm, 4 µm, 5 µm, 6 µm, 7 µm, 8 µm, or 9 µm, or a range formed by any two of the foregoing values.

Optionally, in some embodiments, the thickness of the second base film may further range from 3 µm to 7 µm, for example, may range from 3 µm to 7 µm, from 3 µm to 6 µm, from 3 µm to 5 µm, from 3 µm to 4 µm, from 4 µm to 7 µm, from 4 µm to 6 µm, from 4 µm to 5 µm, from 5 µm to 7 µm, from 5 µm to 6 µm, or from 6 µm to7 µm.

Without intending to be limited to any theory or explanation, when the thickness of the first base film and/or the thickness of the second base film satisfy the foregoing conditions, the separator can have a small overall thickness, so that the energy density of the secondary battery is improved.

The thickness of the base film has well-known meanings in the art, and can be measured by using devices and methods known in the art. For example, six groups of parallel samples may be taken, thicknesses of different positions of each group of samples are measured by using a ten-thousandth micrometer thickness gauge, at least 20 positions are measured for each group of samples, and an average value of thicknesses of six groups of sample is used as the thickness of the samples.

In some embodiments, a material of the first base film may include at least one of polyolefin and a derivative thereof, halogenated polyolefin and a derivative thereof, polyether and a derivative thereof, polyetheretherketone and a derivative thereof, polyester and a derivative thereof, polyimide and a derivative thereof, polyvinyl alcohol and a derivative thereof, polytetrafluoroethylene and a derivative thereof, polyvinyl fluoride and a derivative thereof, polyvinylidene fluoride and a derivative thereof, and polyethylene terephthalate and a derivative thereof.

In some embodiments, a material of the second base film may include at least one of polyolefin and a derivative thereof, halogenated polyolefin and a derivative thereof, polyether and a derivative thereof, polyetheretherketone and a derivative thereof, polyester and a derivative thereof, polyimide and a derivative thereof, polyvinyl alcohol and a derivative thereof, polytetrafluoroethylene and a derivative thereof, polyvinyl fluoride and a derivative thereof, polyvinylidene fluoride and a derivative thereof, and polyethylene terephthalate and a derivative thereof.

The derivatives generally are products derived by replacing hydrogen atoms or atomic groups in a polymer with other atoms or atomic groups.

In some embodiments, the coating may further include a binder. The binder can endow good thermal resistance for the separator while an adhesion strength and uniformity of both the first base film and a second base film are ensured, thereby improving the reliability of the secondary battery.

In some embodiments, the binder may include one or more of polyacrylate, polyacrylic acid, polytetrafluoroethylene, polyvinylidene fluoride, vinylidene fluoride-trichloroethylene copolymer, polyvinylpyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl pullulan.

In some embodiments, a content of the filler may be less than or equal to 90%, and optionally range from 20% to 80% based on the total mass of the coating.

In some embodiments, a content of the binder may be less than or equal to 25%, and optionally range from 5% to 25% based on the total mass of the coating.

In some embodiments, the coating may further include a dispersant, for example, carboxymethyl cellulose, so that a viscosity of slurry of the coating can be adjusted, and quality and uniformity of the coating are improved.

In some embodiments, a transverse thermal shrinkage rate of the separator at 250 °C for 1 h may be less than or equal to 3%, and optionally be less than or equal to 1%.

In some embodiments, a longitudinal thermal shrinkage rate of the separator at 250 °C for 1 h may be less than or equal to 3%, and optionally be less than or equal to 1%.

When the transverse thermal shrinkage rate and/or the longitudinal thermal shrinkage rate of the separator satisfy the provided range, the separator can have good thermal resistance performance and physical performance, so that the reliability of the secondary battery can be improved.

Both the transverse thermal shrinkage rate and the longitudinal thermal shrinkage rate of the separator have well-known meanings in the art, and can be measured by using devices and methods known in the art. For example, testing may be both performed with reference to GB/T 36363-2018.

In some embodiments, the separator of the present application may be prepared by using the following steps: provide the first base film; provide the slurry of the coating, where the slurry of the coating includes the thermochromic material; and coat the slurry of the coating on a surface of the first base film and dry the slurry, to obtain the separator.

Optionally, in some embodiments, the separator of the present application may alternatively be prepared by using the following steps: provide the first base film and the second base film; provide the slurry of the coating, where the slurry of the coating includes the thermochromic material; and coat the slurry of the coating on one of the first base film and the second base film and dry the slurry to form the coating, and compound with the other of the first base film and the second base film, so that the coating is located between the first base film and the second base film, to obtain the separator.

In some embodiments, the slurry of the coating may further include the binder. Optionally, the slurry of the coating may further include the filler.

In some embodiments, a manner of coating the slurry of the coating may be transfer coating, rotation coating, dip coating, or the like. This is not limited in this embodiment of the present application.

Unless otherwise specified, the raw materials (such as the first base film, the second base film, the thermochromic material, the binder, and the filler) used in the method of preparing the separator are commercially available.

### Secondary battery

An embodiment of the present application further provides a secondary battery.

The secondary battery, also referred to as a rechargeable battery or a storage battery, refers to a battery that can be continually used, after the battery is discharged, by activating an active material in a charging manner. Generally, the secondary battery includes an electrode assembly and an electrolyte solution. The electrode assembly includes a positive electrode plate, a negative electrode plate, and a separator. The separator is disposed between the positive electrode plate and the negative electrode plate, to mainly prevent a short circuit between the positive electrode plate and the negative electrode plate, and can allow active ions to pass through.

A type of the secondary battery is not particularly limited in the present application. For example, the secondary battery may be a lithium-ion battery, a sodium-ion battery, a lithium metal battery, or a sodium metal battery. In particular, the secondary battery may be a lithium-ion battery.

The secondary battery provided in the embodiment of the present application includes the foregoing separator of the present application. A thermal runaway status of the battery may be determined by sensing the change of the color of the separator, to process the battery in time, thereby reducing a risk that the battery explodes and improving reliability of the battery.

### [Positive electrode plate]

In some embodiments, the positive electrode plate may include a positive electrode current collector and a positive electrode film layer disposed on at least one surface of the positive electrode current collector and including a positive electrode active material. For example, the positive electrode current collector has two opposite surfaces in a thickness direction of the positive electrode current collector, and the positive electrode film layer is disposed on either or both of the two opposite surfaces of the positive electrode current collector.

When the secondary battery is a lithium-ion battery, the positive electrode active material may include, but is not limited to, at least one of a lithium transition metal oxide, a lithium-containing phosphate, and respective modified compounds thereof. Examples of the lithium transition metal oxide may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of lithium-containing phosphate may include, but are not limited to, at least one of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof.

In some embodiments, to further improve an energy density of the secondary battery, the positive electrode active material used for the lithium-ion battery may include at least one of a lithium transition metal oxide represented by a general formula LiₐNi_{b}Co_{c}M_{d}OₑA_{f} and a modified compound thereof. 0.8≤a≤1.2, 0.5≤b, 1, 0<c<1, 0<d<1, 1≤e≤2, and 0≤f≤1. M is selected from at least one of Mn, Al, Zr, Zn, Cu, Cr, Mg, Fe, V, Ti, and B, A is selected from at least one of N, F, S, and Cl.

For example, the positive electrode active material used for the lithium-ion battery may include at least one of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄, and LiMnPO₄.

When the secondary battery is a sodium-ion battery, the positive electrode active material may include, but is not limited to, at least one of sodium containing transition metal oxide, a polyanionic material (for example, phosphate, fluorophosphate, pyrophosphate, or sulfate), and a Prussian blue material.

For example, the positive electrode active material used for the sodium-ion battery may include at least one of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, and a material represented by a general formula XₚM'_{q}(PO₄)ᵣOₓY₃₋ₓ. In the general formula XₚM'_{q}(PO₄)ᵣOₓY₃₋ₓ, 0<p≤4, 0<q≤2, 1≤r≤3, and 0≤x≤2. X is selected from at least one of H⁺, Li⁺, Na⁺, K⁺, and NH₄⁺. M' is a transition metal cation, and is optionally at least one of V, Ti, Mn, Fe, Co, Ni, Cu, and Zn. Y is a halogen anion, and is optionally at least one of F, Cl, and Br.

The modified compounds of the positive electrode active materials may be obtained by performing doping modification and/or surface coating modification on the positive electrode active material.

In some embodiments, the positive electrode film layer may further optionally include a positive electrode conductive agent. A type of the positive electrode conductive agent is not particularly limited in the present application. For example, the positive electrode conductive agent includes at least one of superconducting carbon, conductive graphite, acetylene black, carbon black, Ketjen black, carbon dots, carbon nanotubes, graphene, and carbon nanofibers.

In some embodiments, the positive electrode film layer may further optionally include a positive electrode binder. A type of the positive electrode binder is not particularly limited in the present application. For example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylenehexafluoropropylene copolymer, and fluorine-containing acrylate resin.

In some embodiments, the positive electrode current collector may use a metal foil or a composite current collector. As an example of the metal foil, an aluminum foil may be used. The composite current collector may include a polymer material base layer and a layer of a metal material formed on at least one surface of the polymer material base layer. For example, the metal material may include at least one of aluminum, aluminum alloy, nickel, nickel alloy, titanium, titanium alloy, silver, and silver alloy. For example, the polymer material base layer may include at least one of polypropylene (PP), polyethylene terephthalate (PET), polybutylene terephthalate (PBT), polystyrene (PS), and polyethylene (PE).

The positive electrode film layer is usually formed by coating positive electrode slurry on the positive electrode current collector and performing drying and cold pressing. The positive electrode slurry is usually formed by dispersing the positive electrode active material, an optional conductive agent, an optional binder, and any other components in a solvent and performing stirring uniformly. The solvent may be, but is not limited to, N-methyl pyrrolidone (NMP).

### [Negative electrode plate]

In some embodiments, the negative electrode plate may include a negative electrode current collector and a negative electrode film layer disposed on at least one surface of the negative electrode current collector and including a negative electrode active material. For example, the negative electrode current collector has two opposite surfaces in a thickness direction of the negative electrode current collector, and the negative electrode film layer is disposed on either or both of the two opposite surfaces of the negative electrode current collector.

The negative electrode active material may be a negative electrode active material used for a secondary battery and well known in the art. For example, the negative electrode active material may include, but is not limited to, at least one of natural graphite, artificial graphite, soft carbon, hard carbon, a silicon-based material, a tin-based material, a lithium titanate. The silicon-based material may include at least one of elemental silicon, silicon oxide, a silicon-carbon composite, a silicon-nitrogen composite, and a silicon alloy material. The tin-based material may include at least one of elemental tin, tin oxide, and a tin alloy material.

In some embodiments, the negative electrode film layer may further optionally include a negative electrode conductive agent. A type of the negative electrode conductive agent is not particularly limited in the present application. For example, the negative electrode conductive agent may include at least one of superconducting carbon, conductive graphite, acetylene black, carbon black, Ketjen black, carbon dots, carbon nanotubes, graphene, and carbon nanofibers.

In some embodiments, the negative electrode film layer may further optionally include a negative electrode binder. A type of the negative electrode binder is not particularly limited in the present application. For example, the negative electrode binder may include at least one of styrene-butadiene rubber (SBR), water-soluble unsaturated resin SR-1B, waterborne acrylic resin (for example, polyacrylic acid PAA, poly(methyl methacrylate) PMMA, and sodium polyacrylate PAAS), polyacrylamide (PAM), polyvinyl alcohol (PVA), sodium alginate (SA), and carboxymethyl chitosan (CMCS).

In some embodiments, the negative electrode film layer may further optionally include other additives. For example, the other additives may include a thickening agent, for example, sodium carboxymethyl cellulose (CMC) and a PTC thermistor material.

In some embodiments, the negative electrode current collector may use a metal foil or a composite current collector. As an example of the metal foil, a copper foil may be used. The composite current collector may include a polymer material base layer and a layer of a metal material formed on at least one surface of the polymer material base layer. For example, the metal material may include at least one of copper, copper alloy, nickel, nickel alloy, titanium, titanium alloy, silver, and silver alloy. For example, the polymer material base layer may include at least one of polypropylene (PP), polyethylene terephthalate (PET), polybutylene terephthalate (PBT), polystyrene (PS), and polyethylene (PE).

The negative electrode film layer is usually formed by coating negative electrode slurry on the negative electrode current collector and performing drying and cold pressing. The negative electrode slurry is usually formed by dispersing the negative electrode active material, an optional conductive agent, an optional binder, and other optional additives in a solvent and performing stirring uniformly. The solvent may be N-methylpyrrolidone (NMP) or deionized water, but is not limited thereto.

The negative electrode plate does not exclude other additional functional layers than the negative electrode film layer. For example, in some embodiments, the negative electrode plate further includes a conductive primer coating (which is, for example, formed by a conductive agent and a binder) sandwiched between the negative electrode current collector and the negative electrode film layer and disposed on the surface of the negative electrode current collector. In some embodiments, the negative electrode plate in the present application further includes a protective layer covering a surface of the negative electrode film layer.

### [Electrolyte solution]

During charging and discharging of the secondary battery, active ions are intercalated and de-intercalated back and forth between the positive electrode plate and the negative electrode plate, and the electrolyte solution conducts the active ions between the positive electrode plate and the negative electrode plate. A type of the electrolyte solution is not particularly limited in the present application, and can be selected according to actual requirements.

The electrolyte solution includes an electrolyte salt and a solvent. Types of the electrolyte salt and the solvent are not specifically limited, and may be selected according to actual requirements.

When the secondary battery is a lithium-ion battery, for example, the electrolyte salt may include, but is not limited to, at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium triflate (LiTFS), lithium difluorooxalate borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP).

When the secondary battery is a sodium-ion battery, for example, the electrolyte salt may include, but is not limited to, at least one of sodium hexafluorophosphate (NaPF₆), sodium tetrafluoroborate (NaBF₄), sodium perchlorate (NaClO₄), sodium hexafluoroarsenate (NaAsF₆), sodium bis(fluorosulfonyl)imide (NaFSI), sodium bis(trifluoromethanesulfonyl)imide (NaTFSI), sodium triflate (NaTFS), sodium difluoro(oxalato)borate (NaDFOB), sodium bis(oxalato)borate (NaBOB), sodium difluorophosphate (NaPO₂F₂), sodium difluorobis(oxalate) phosphate (NaDFOP), and sodium tetrafluoro(oxalato)phosphate (NaTFOP).

For example, the solvent may include, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolyte solution may optionally include an additive. For example, the additive may include a negative electrode film forming additive, or may include a positive electrode film forming additive, and may further include an additive that can improve particular battery performance, for example, an additive that improves battery overcharging performance, an additive that improves high temperature performance of the battery, or an additive that improves low temperature power performance of the battery.

In some embodiments, the positive electrode plate, the separator, and the negative electrode plate may be made into an electrode assembly by using a winding process or a laminating process. It may be understood that, in some embodiments, the separator in the present application includes both the first base film and the second base film, and the first base film or the second base film may optionally face the positive electrode plate or the negative electrode plate. For example, the first base film faces the positive electrode plate and the second base film faces the negative electrode plate. Alternatively, the first base film faces the negative electrode plate, and the second base film faces the positive electrode plate.

In some embodiments, the secondary battery may include an outer packaging. The outer packaging may be used for packaging the foregoing electrode assembly and the electrolyte solution. In some embodiments, a detection apparatus configured to sense a change of a color of the separator may be further encapsulated in the outer packaging. For example, a color sensor may be encapsulated, and the color sensor may be aligned with the separator, to obtain the color of the separator.

In some embodiments, the outer packaging of the secondary battery may be a hard case, such as a hard plastic case, an aluminum case, or a steel case. The outer packaging of the secondary battery may alternatively be a soft package such as a pouch-type soft package. A material of the soft package may be plastic, for example, at least one of polypropylene (PP), polybutylene terephthalate (PBT), and polybutylene succinate (PBS).

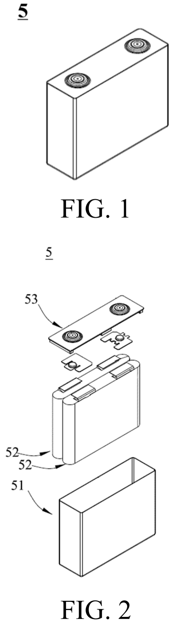

A shape of the secondary battery is not particularly limited in the present application, and the secondary battery may be cylindrical, prismatic, or of any other shape. For example, FIG. 1 shows a secondary battery 5 having a rectangle structure as an example.

In some embodiments, as shown in FIG. 2, the outer packaging may include a housing 51 and a cover plate 53. The housing 51 may include a bottom plate and a side plate connected to the bottom plate. The bottom plate and the side plate enclose an accommodating cavity. The housing 51 is provided with an opening in communication with the accommodating cavity, and the cover plate 53 is used for covering the opening to close the accommodating cavity. An electrode assembly 52 may be formed by the positive electrode plate, the negative electrode plate, and the separator through a winding process and/or a laminating process. The electrode assembly 52 is packaged in the accommodating cavity. The electrolytic solution infiltrates into the electrode assembly 52. A quantity of electrode assemblies 52 included in the secondary battery 5 may be one or more, and may be adjusted as required.

A method of preparing the secondary battery is well-known. In some embodiments, the positive electrode plate, the separator, the negative electrode plate, and the electrolyte solution may be assembled to form the secondary battery. For example, the electrode assembly may be formed by the positive electrode plate, the separator, and the negative electrode plate through a winding process and/or a laminating process. The electrode assembly is disposed in the outer packaging and dried, and then the electrolyte solution is injected. The secondary battery is obtained by performing procedures such as vaccum encapsulation, static disposing, forming, and shaping.

In some embodiments, the secondary battery of the present application may be assembled into a battery module, and a quantity of secondary batteries included in the battery module may be one or more. The specific quantity may be adjusted based on application and a capacity of the battery module.

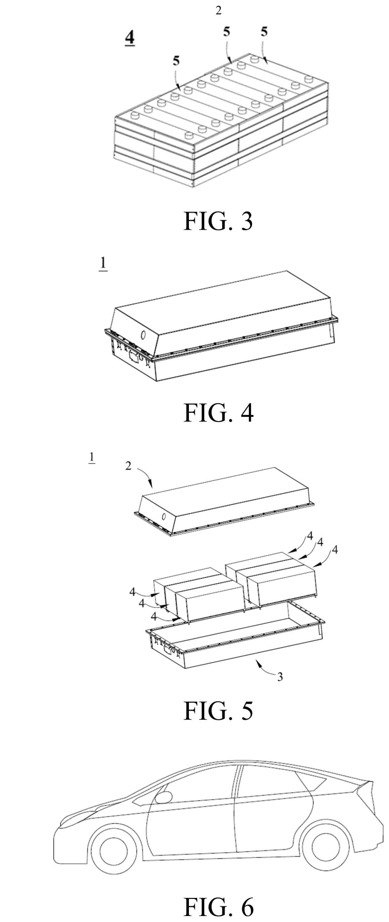

FIG. 3 is a schematic diagram of a battery module 4 as an example. As shown in FIG. 3, in the battery module 4, a plurality of secondary batteries 5 may be sequentially arranged in a length direction of the battery module 4. Certainly, the secondary batteries 5 may alternatively be arranged in any other manner. Further, the plurality of secondary batteries 5 may be fixed by using fasteners.

Optionally, the battery module 4 may further include an outer shell with an accommodating space, and the plurality of secondary batteries 5 are accommodated in the accommodating space.

In some embodiments, the battery modules may further form a battery pack, and a quantity of battery modules included in the battery pack may be adjusted based on application and a capacity of the battery pack.

FIG. 4 and FIG. 5 are schematic diagrams of a battery pack 1 as an example. As shown in FIG. 4 and FIG. 5, the battery pack 1 may include a battery box and a plurality of battery modules 4 provided in the battery box. The battery box includes an upper box 2 and a lower box 3. The upper box 2 is configured to cover the lower box 3 to form a closed space for accommodating the battery modules 4. The plurality of battery modules 4 may be arranged in the battery box in any manner.

### Power consuming apparatus

An embodiment of the present application further provides a power consuming apparatus. The power consuming apparatus includes at least one of the secondary battery, the battery module, or the battery pack provided in the embodiments of the present application. The secondary battery, the battery module, or the battery pack may be used as a power supply of the power consuming apparatus, and may also be used as an energy storage unit of the power consuming apparatus. The power consuming apparatus may be, but is not limited to, a mobile device (for example, a mobile phone, or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship and a satellite, an energy storage system, or the like.

The power consuming apparatus can select the secondary battery, the battery module, or the battery pack according to a use requirement of the power consuming apparatus.

FIG. 6 is a schematic diagram of a power consuming apparatus as an example. The power consuming apparatus is a pure electric vehicle, a hybrid electric vehicle, a plug-in hybrid electric vehicle, or the like. To meet the requirements of the power consuming apparatus for high power and high energy density, a battery pack or a battery module may be used.

For another example, the power consuming apparatus may be a mobile phone, a tablet computer, or a notebook computer. The power consuming apparatus is generally required to be thin and light, and may have a secondary battery used as a power supply.

### Example

Content disclosed in the present application is described in detail in the following examples. These examples are only for illustrative purposes because various modifications and changes made without departing from the scope of the content disclosed in the present application are apparent to persons skilled in the art. Unless otherwise stated, all parts, percentages, and ratios of the following examples are based on weight, all reagents used in the examples are commercially available or synthesized according to conventional methods and can be directly used without further treatment, and all instruments used in the examples are commercially available.

### Example 1

### Preparation of a separator

A first base film was provided, where a material of the first base film included polypropylene (PP), and a thickness was 9 µm.

A second base film was provided, where a material of the first base film included polyethylene (PE), and a thickness was 7 µm.

Slurry of a coating was prepared: A thermochromic material dimethylamino benzene azobenzene, a filler boehmite, a binder polyacrylate, and a dispersant carboxymethyl cellulose were uniformly mixed in a proper amount of solvent deionized water according to a mass ratio of 3%:77%:10%:10%, to prepare the slurry of the coating.

The slurry of the coating was coated on the PE base film to form the coating, the PP base film was compounded with the PE base film, so that the coating was located between the PP base film and the PE base film, and then drying was performed to prepare the separator, where a thickness of the coating was 2 µm.

### Preparation of a positive electrode plate

A positive electrode active material LiNi_{0.8}Co_{0.1}Mn_{0.1}O₂ (NCM811), a conductive agent carbon black (Super P), and a binder polyvinylidene fluoride (PVDF) were uniformly mixed in a proper amount of solvent N-methylpyrrolidone (NMP) according to a mass ratio of 96.2%:2.7%:1.1%, to obtain positive electrode slurry; and the positive electrode slurry was coated on a positive electrode current collector aluminum foil, and procedures such as drying, cold pressing, slitting, and cutting were performed, to obtain the positive electrode plate.

### Preparation of a negative electrode plate

A negative electrode active material artificial graphite, a conductive agent carbon black (Super P), a binder styrene-butadiene rubber (SBR), and sodium carboxymethyl cellulose (CMC) were uniformly mixed in a proper amount of solvent deionized water according to a mass ratio of 96.4%:0.7%:1.8%:1.1%, to obtain negative electrode slurry; and the negative electrode slurry was coated on a negative electrode current collector copper foil, and procedures such as drying, cold pressing, slitting, and cutting were performed, to obtain the negative electrode plate.

### Preparation of an electrolyte solution

Ethylene carbonate (EC), dimethyl carbonate (DMC), and ethyl methyl carbonate (EMC) were mixed according to a mass ratio of 30:30:40, to obtain an organic solvent, and fully dried LiPF₆ was dissolved in the organic solvent to prepare the electrolyte solution with a concentration of 1 mol/L.

### Preparation of a secondary battery

The positive electrode plate, the foregoing prepared separator, and the negative electrode plate were stacked and wound, to obtain an electrode assembly, where the first base film in the separator faced a negative electrode; and the electrode assembly was disposed in an outer packaging and dried, and then the electrolyte solution was injected. The secondary battery was obtained by performing procedures such as vaccum encapsulation, static disposing, forming, and shaping.

Secondary batteries in Examples 2 to 20 and Comparative examples 1 and 2 are similar to that in Example 1, differences lie in that different base films are used or a parameter of the coating is adjusted. For details, refer to Table 1. Separators in Example 20 and Comparative example 2 include only the first base film and the coating compounded on a surface of the first base film.

### Test section

The following tests are performed on the separators and the secondary batteries Examples 1 to 20 and Comparative examples 1 and 2, and test results are respectively shown in Table 2.

### (1) Test of a thermal shrinkage rate of the separator

Sample preparation: The foregoing prepared separator was punched by using a punching press to obtain samples whose width was 50 mm and length was 100 mm, and five parallel samples were disposed and fixed on a glass plate.

Sample test: A temperature of a forced draft oven was set to 250 °C. After the set temperature was reached and was stable for 30 minutes, the glass plate was put into the forced draft oven, timing of one hour was performed. After the timing ended, a width of the separator was measured. A value of the width was denoted as a, and a unit was mm.

Calculation of the thermal shrinkage rate: Transverse (TD) thermal shrinkage rate=[(50-a)/50] × 100%. An average value of the five parallel samples was used as a test result.

### (2) Test of a color-changing temperature of the separator

Sample preparation: The foregoing prepared separator was punched by using a punching press to obtain samples whose width was 50 mm and length was 100 mm. Four samples were simultaneously prepared. One of the four samples was used as a standard sample and was stored at a room temperature.

Sample test: The samples were put into a controllable thermostatic box, were gradually heated, and were compared with the standard sample. After colors of the samples changed, color-changing temperatures were recorded, and the samples were taken out. Measurement was performed in parallel for three times, and an average temperature was calculated and used as the color-changing temperature of the separator.

### (3) Test of cycle performance of the battery

At 25°C, the battery in each Example and Comparative example was charged to a voltage of 4.2 V at a constant current of 1 C and then charged at a constant voltage of 4.2 V until the current was less than or equal to 0.05 C, and then the battery was discharged to a voltage of 2.8 V at a constant current of 1 C. This was a charge and discharge process. In this case, a discharge capacity was recorded as a discharge capacity of the battery at a first cycle. Charging and discharging cycles were repeated in such a manner, and a corresponding quantity of cycles when a capacity was reduced to 85% was recorded.

**Table 1**

| Serial number | Thermochromic material | Content of the thermochromic material in a coating/% | Thickness of the coating/µm |
|---|---|---|---|
| Example 1 | Dimethylamino benzene azobenzene | 3 | 2 |
| Example 2 | Barium stearate | 3 | 2 |
| Example 3 | Hexadecanol | 3 | 2 |
| Example 4 | Bisphenol A | 3 | 2 |
| Example 5 | 6-hydroxyhexanoic acid | 3 | 2 |
| Example 6 | Triphenylmethane nickel coordination complex | 3 | 2 |
| Example 7 | Bianthrone | 3 | 2 |
| Example 8 | BiVO4 | 3 | 2 |
| Example 9 | BiVO4 | 0.5 | 2 |
| Example 10 | BiVO4 | 1 | 2 |
| Example 11 | BiVO4 | 5 | 2 |
| Example 12 | BiVO4 | 7 | 2 |
| Example 13 | Dimethylamino benzene azobenzene | 0.5 | 2 |
| Example 14 | Dimethylamino benzene azobenzene | 1 | 2 |
| Example 15 | Dimethylamino benzene azobenzene | 5 | 2 |
| Example 16 | Dimethylamino benzene azobenzene | 7 | 2 |
| Example 17 | BiVO4 | 3 | 0.5 |
| Example 18 | BiVO4 | 3 | 1 |
| Example 19 | BiVO4 | 3 | 1.5 |
| Example 20 | BiVO4 | 3 | 2 |
| Comparative example 1 | / | / | 2 |
| Comparative example 2 | / | / | 2 |

**Table 2**

| Serial number | Thermal shrinkage rate (TD) | Color-changing temperature | Cycle performance/cycles |
|---|---|---|---|
| Example 1 | 2.3% | 120°C | 1701 |
| Example 2 | 2.2% | 138°C | 1752 |
| Example 3 | 2.2% | 130°C | 1772 |
| Example 4 | 2.5% | 125°C | 1650 |
| Example 5 | 2.5% | 110°C | 1603 |
| Example 6 | 2.1% | 135°C | 1805 |
| Example 7 | 2.2% | 120°C | 1720 |
| Example 8 | 1.6% | 135°C | 1905 |
| Example 9 | 1.7% | 135°C | 1922 |
| Example 10 | 1.6% | 135°C | 1950 |
| Example 11 | 1.6% | 135°C | 1901 |
| Example 12 | 1.4% | 135°C | 1920 |
| Example 13 | 2.8% | 120°C | 1742 |
| Example 14 | 2.5% | 120°C | 1781 |
| Example 15 | 2.1% | 120°C | 1810 |
| Example 16 | 1.8% | 120°C | 1880 |
| Example 17 | 2.9% | 135°C | 1756 |
| Example 18 | 2.3% | 135°C | 1760 |
| Example 19 | 1.7% | 135°C | 1790 |
| Example 20 | 3.5% | 135°C | 1705 |
| Comparative example 1 | 1.5% | / | 1250 |
| Comparative example 2 | 5.6% | / | 820 |

In combination of the test results in Table 1 and Table 2, it can be learned that the separators in Examples 1 to 20 can change the color from 120°C to 138°C. Therefore, a thermal runaway status of the battery can be determined by sensing the change of the color of the separators, to process the battery in time, thereby improving reliability of the battery.

In combination of the test results of Examples 1 to 16, it can be learned that, in comparison with another thermochromic material, the thermochromic material of the inorganic metal salt type, such as BiVO₄, can improve thermal resistance performance of the separator. In combination of the test results of Examples 17 to 19, it can be learned that, when other conditions are the same, as the thickness of the coating increases, the thermal resistance performance of the separator increases. In combination of Examples 8 and 20, it can be learned that, in comparison with the separator in which the base film is compounded on one side of the coating, when the base films are compounded on both sides of the coating, the separator can have better thermal resistance performance.

In comparison with this, the coatings in Comparative examples 1 and 2 do not include the thermochromic material, and the thermal runaway status of the battery cannot be determined by sensing the change of the color of the separators. As a result, the battery at a risk of thermal runaway cannot be processed in time.

It should be noted that the present application is not limited to the embodiments above. The above-described embodiments are merely exemplary, and embodiments having substantially the same technical idea and the same effects within the scope of the technical solution of the present application are all included in the technical scope of the present application. In addition, without departing from the scope of the gist of the present application, various modifications that can be conceived by those skilled in the art and applied to the implementations, and other modes constructed by combining some of the components in the implementations are also encompassed in the scope of the present application.

## Claims

1. A separator, comprising:
a first base film; and
a coating, located on a surface of the first base film, wherein the coating comprises a thermochromic material.

2. The separator according to claim 1, wherein
the thermochromic material comprises one or more of a thermochromic material of an azobenzene type, a thermochromic material of a stearate type, a thermochromic material of a higher aliphatic alcohol type, a thermochromic material of a type of a hydroxyl-group compound comprising a carboxyl group, a thermochromic material of a phenolic-hydroxyl-group compound type, a thermochromic material of a metal coordination complex type, a thermochromic material of a type of a polyaromatic ring structure comprising CH=CH, and a thermochromic material of an inorganic metal salt type, wherein
optionally, the thermochromic material of the azobenzene type comprises dimethylamino benzene azobenzene;
optionally, the thermochromic material of the stearate type comprises barium stearate and/or zinc stearate;
optionally, the thermochromic material of the higher aliphatic alcohol type comprises hexadecanol and/or octadecanol;
optionally, the thermochromic material of the type of the hydroxyl-group compound comprising the carboxyl group comprises 6-hydroxyhexanoic acid and/or 2-hydroxyterephthalic acid;
optionally, the thermochromic material of the phenolic-hydroxyl-group compound type comprises bisphenol A and/or benzyl 4-hydroxybenzoate;
optionally, the thermochromic material of the metal coordination complex type comprises one or more of a triphenylmethane metal coordination complex, an organic amine metal coordination complex, and an ammonium metal coordination complex;
optionally, the thermochromic material of the type of the polyaromatic ring structure comprising CH=CH comprises one or more of bianthrone-type compounds; and
optionally, the thermochromic material of the inorganic metal salt type comprises one or more of a sulfate comprising a metal element M, a vanadate, and a chromate, and the metal element M comprises one or more of Bi, Pb, Ni, Co, and Cd.

3. The separator according to claim 1 or 2, wherein
the thermochromic material comprises a reversible thermochromic material;
optionally, the reversible thermochromic material comprises one or more of the thermochromic material of the higher aliphatic alcohol type, the thermochromic material of the type of the hydroxyl-group compound comprising the carboxyl group, the thermochromic material of the phenolic-hydroxyl-group compound type, the thermochromic material of the metal coordination complex type, and the thermochromic material of the type of the polyaromatic ring structure comprising CH=CH; and
further optionally, the reversible thermochromic material comprises one or more of hexadecanol, octadecanol, 6-hydroxyhexanoic acid, 2-hydroxyterephthalic acid, bisphenol A, benzyl 4-hydroxybenzoate, a triphenylmethane metal coordination complex, an organic amine metal coordination complex, an ammonium metal coordination complex, and bianthrone-type compounds.

4. The separator according to claim 1 or 2, wherein
the thermochromic material comprises the thermochromic material of the inorganic metal salt type; and
optionally, the thermochromic material comprises one or more of a sulfate comprising a metal element M, a vanadate, and a chromate, and the metal element M comprises one or more of Bi, Pb, Ni, Co, and Cd.

5. The separator according to any one of claims 1 to 4, wherein
a content of the thermochromic material ranges from 0.5% to 7%, and optionally from 1% to 5% based on a total mass of the coating.

6. The separator according to any one of claims 1 to 5, wherein
the coating further comprises a binder, and the binder comprises one or more of polyacrylate, polyacrylic acid, polytetrafluoroethylene, polyvinylidene fluoride, vinylidene fluoride-trichloroethylene copolymer, polyvinylpyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl pullulan; and
optionally, a content of the binder is less than or equal to 25%, and optionally ranges from 5% to 25% based on the total mass of the coating.

7. The separator according to any one of claims 1 to 6, wherein
the coating further comprises a filler;
optionally, the filler comprises at least one of inorganic particles, organic particles, and an organic-metal framework material;
further optionally, the inorganic particles comprise one or more of inorganic particles with a dielectric constant greater than 5, inorganic particles having ion conductivity but storing no ion, and inorganic particles capable of performing electrochemical reaction;
further optionally, the organic particles comprise one or more of polycarbonate, polytetrafluorethylene, polypyrrole, polystyrene, polyacrylate wax, polyethylene, polypropylene, cellulose, a cellulose modifier, melamine resin, phenolic resin, polyester, organic silicon resin, polyimide, polyamide-imide, aromatic polyamide, polyphenylene sulfide, polysulfone, polyethersulfone, polyetheretherketone, polyetherketoneketone, and copolymer of butyl acrylate and ethyl methacrylate; and
further optionally, the organic-metal framework material comprises one or more of a structure constructed by nitrogen-containing heterocyclic ligands, a structure constructed by organic carboxylic ligands, and a structure constructed by nitrogen-oxygen-containing mixed ligands.

8. The separator according to claim 7, wherein a content of the filler is less than or equal to 90%, and optionally ranges from 20% to 80% based on the total mass of the coating.

9. The separator according to any one of claims 1 to 8, wherein a thickness of the coating ranges from 0.5 µm to 3 µm, and optionally ranges from 1 µm to 2 µm.

10. The separator according to any one of claims 1 to 9, wherein
the separator further comprises a second base film, and the coating is located between the first base film and the second base film.

11. The separator according to any one of claims 1 to 10, wherein
a thickness of the first base film ranges from 2 µm to 10 µm, and optionally ranges from 3 µm to 8 µm; and/or
a thickness of the second base film ranges from 3 µm to 9 µm, and optionally ranges from 3 µm to 7 µm.

12. The separator according to any one of claims 1 to 11, wherein
a material of the first base film comprises at least one of polyolefin and a derivative thereof, halogenated polyolefin and a derivative thereof, polyether and a derivative thereof, polyetheretherketone and a derivative thereof, polyester and a derivative thereof, polyimide and a derivative thereof, polyvinyl alcohol and a derivative thereof, polytetrafluoroethylene and a derivative thereof, polyvinyl fluoride and a derivative thereof, polyvinylidene fluoride and a derivative thereof, and polyethylene terephthalate and a derivative thereof; and/or
a material of the second base film comprises at least one of polyolefin and a derivative thereof, halogenated polyolefin and a derivative thereof, polyether and a derivative thereof, polyetheretherketone and a derivative thereof, polyester and a derivative thereof, polyimide and a derivative thereof, polyvinyl alcohol and a derivative thereof, polytetrafluoroethylene and a derivative thereof, polyvinyl fluoride and a derivative thereof, polyvinylidene fluoride and a derivative thereof, and polyethylene terephthalate and a derivative thereof.

13. The separator according to any one of claims 1 to 12, wherein
a transverse thermal shrinkage rate of the separator at 250 °C for 1 h is less than or equal to 3%, and is optionally less than or equal to 1%; and/or
a longitudinal thermal shrinkage rate of the separator at 250 °C for 1 h is less than or equal to 3%, and is optionally less than or equal to 1%.

14. A secondary battery, comprising the separator according to any one of claims 1 to 13.

15. A power consuming apparatus, comprising the secondary battery according to claim 14.
